# EUROPEAN PATENT SPECIFICATION

(11) **EP 4 173 387 B1**
(45) Date of publication and mention of the grant of the patent: **18.03.2026**
(21) Application number: 20737621.1
(22) Date of filing: 25.06.2020
(51) Int. Cl.: H04W 68/12, H04W 48/18, H04W 76/27, H04W 88/06, H04W 92/24

(54) **FIRST CORE NETWORK NODE AND METHOD PERFORMED THEREIN FOR PAGING IN A WIRELESS COMMUNICATION NETWORK**
ERSTER KERNNETZKNOTEN UND DARIN AUSGEFÜHRTES VERFAHREN ZUM FUNKRUF IN EINEM DRAHTLOSEN KOMMUNIKATIONSNETZ
PREMIER NOEUD DE RESEAU CENTRAL ET PROCEDE EXECUTE DANS CELUI-CI POUR LA RADIOMESSAGERIE DANS UN RESEAU DE COMMUNICATION SANS FIL

(43) Date of publication of application: 03.05.2023
(73) Proprietor: Telefonaktiebolaget LM Ericsson (publ), 164 83 Stockholm (SE)
(72) Inventor: TORABIAN ESFAHANI, Tahmineh, 583 33 Linköping (SE); MODARRES RAZAVI, Sara, 583 32 Linköping (SE); LUNARDI, Luca, 16145 Genoa (IT); SHEN, Wei, 582 16 Linköping (SE); DREVÖ, Markus, 582 19 Linköping (SE)
(74) Representative: Ericsson
(86) International application number: PCT/SE2020/050666
(87) International publication number: WO 2021/262055

(56) References cited:
- WO-A1-2008/046271
- WO-A2-2020/176032
- US-A1- 2020 053 830
- CATT: "Signalling enhnacement for Inactive state", vol. RAN WG2, no. Reno, USA; 20191118 - 20191122, 8 November 2019 (2019-11-08), XP051816598, Retrieved from the Internet <URL:https://ftp.3gpp.org/tsg_ran/WG2_RL2/TSGR2_108/Docs/R2-1914532.zip R2-1914532.docx> [retrieved on 20191108]
- "3rd Generation Partnership Project; Technical Specification Group Services and System Aspects; System architecture for the 5G System (5GS); Stage 2 (Release 16)", vol. SA WG2, no. V16.4.0, 27 March 2020 (2020-03-27), pages 1 - 430, XP051861090, Retrieved from the Internet <URL:ftp://ftp.3gpp.org/Specs/archive/23_series/23.501/23501-g40.zip 23501-g40.docx> [retrieved on 20200327]
- CATT: "Signalling enhnacement for Inactive state", vol. RAN WG2, no. Prague, Czech Republic; 20190826 - 20190830, 16 August 2019 (2019-08-16), XP051766720, Retrieved from the Internet <URL:http://www.3gpp.org/ftp/tsg_ran/WG2_RL2/TSGR2_107/Docs/R2-1908902.zip> [retrieved on 20190816]
- LG ELECTRONICS INC: "Paging response to CN paging in RRC INACTIVE", vol. RAN WG2, no. Athens, Greece; 20170213 - 20170217, 12 February 2017 (2017-02-12), XP051212390, Retrieved from the Internet <URL:http://www.3gpp.org/ftp/Meetings_3GPP_SYNC/RAN2/Docs/> [retrieved on 20170212]
- "3rd Generation Partnership Project; Technical Specification Group Radio Access Network; NR; NR and NG-RAN Overall Description; Stage 2 (Release 16)", vol. RAN WG2, no. V16.1.0, 8 April 2020 (2020-04-08), pages 1 - 133, XP051893891, Retrieved from the Internet <URL:ftp://ftp.3gpp.org/Specs/archive/38_series/38.300/38300-g10.zip 38300-g10.docx> [retrieved on 20200408]

## Description

### TECHNICAL FIELD

The invention relate to a first core network node and method performed as well as a computer program product and a computer-readable storage medium.

In particular, embodiments herein relate to handling communication in a wireless communication network.

### BACKGROUND

In a typical wireless communication network, user equipment (UE), also known as wireless communication devices, mobile stations, stations (STA) and/or wireless devices, communicate via a Radio Access Network (RAN) to one or more core networks belonging to different network operators. The RAN covers a geographical area which is divided into areas or cell areas, with each area or cell area being served by a radio network node, e.g., a Wi-Fi access point, a RAN node or a Radio Base Station (RBS), which in some networks may also be called, for example, a NodeB, eNodeB or a gNodeB. The area or cell area is a geographical area where radio coverage is provided by the radio network node. The radio network node communicates over an air interface operating on radio frequencies with the UE within range of the radio network node.

A Universal Mobile Telecommunications System (UMTS) is a third generation telecommunication network, which evolved from the second generation (2G) Global System for Mobile Communications (GSM). The UMTS Terrestrial Radio Access Network (UTRAN) is essentially a RAN using Wideband Code Division Multiple Access (WCDMA) and/or High Speed Packet Access (HSPA) for user equipment. In a forum known as the Third Generation Partnership Project (3GPP), telecommunications suppliers propose and agree upon standards for third generation networks and UTRAN specifically, and investigate enhanced data rate and radio capacity. In some RANs, e.g. as in UMTS, several radio network nodes may be connected, e.g., by landlines or microwave, to a controller node, such as a Radio Network Controller (RNC) or a Base Station Controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE, sometimes also referred to as "EUTRA", is a variant of a 3GPP Radio Access Technology (RAT) wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs.

With the emerging 5G technologies such as New Radio (NR), the use of a large number of transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals coming from a selected direction or directions, while suppressing unwanted signals coming from other directions.

UEs may have functionality of using more than one RAT, e.g. both LTE and NR. A UE can have the capability to alternate between two RATs, e.g. due to connection and/or preference. When a new page is received by a core network node, there may be a need to search the UE within two RATs due to crude update information about where the UE is. There is thus a need for improvement of inter-RAT paging when a UE is located at the border between two RATs. An inter-RAT paging process is disclosed in 3GPP change request document R2-1914532, from CATT, titled "Signalling enhancement for Inactive state".

### SUMMARY

The invention is defined in appended independent claims 1, 6 and 11-12. Further embodiments are defined in dependent claims 2-5 and 7-10.

An object of embodiments herein is to provide a mechanism that handles communication in a more efficient manner.

According to an aspect the object is achieved by providing a method performed by a first core network node serving a first RAT, for enabling paging of a UE in a wireless communication network. The first core network node receives an incoming communication addressed to the UE. The first core network node further detects that the UE has a dual registration in the first RAT and in a second RAT. The first core network node further transmits a paging notification to a second core network node serving the second RAT as an instruction to page the UE in the second RAT, thereby enabling paging of the UE in both the first RAT and the second RAT of the wireless communication network.

According to another aspect of embodiments herein, the object is achieved by providing a first core network node serving a first RAT, for enabling paging of a UE in a wireless communication network. The first core network node is configured to receive an incoming communication addressed to the UE. The first core network node is further configured to detect that the UE has a dual registration in the first RAT and in a second RAT The first core network node is further configured to transmit a paging notification to a second core network node serving the second RAT as an instruction to page the UE in the second RAT, thereby paging of the UE in both the first RAT and the second RAT of the wireless communication network is enabled.

It is furthermore provided herein a computer program product comprising instructions, which, when executed on at least one processor, cause the at least one processor to carry out the method above, as performed by the first core network node. It is additionally provided herein a computer-readable storage medium, having stored thereon a computer program product comprising instructions which, when executed on at least one processor, cause the at least one processor to carry out the method according to the method above, as performed by the first core network node.

Embodiments herein are based on the realisation that the first core network node detects that the UE has a dual registration in the first RAT and in a second RAT. The first core network node can then transmit a paging notification to a second core network node serving the second RAT as an instruction to page the UE in the second RAT. Thereby paging of the UE in both the first RAT and the second RAT of the wireless communication network is enabled and thus the communication is handled in a more efficient manner and the power consumption of the UE is decreased.

### BRIEF DESCRIPTION OF THE DRAWINGS

Examples of embodiments herein are described in more detail with reference to attached drawings in which:
- Fig. 1: is a schematic overview depicting a network architecture including an EPS and a 5G System, 5GS.
- Fig. 2: is a state diagram illustrating a UE state machine and state transitions between NR/5GC, E-UTRA/EPC and E-UTRA/5GC.
- Fig. 3: is a schematic communication scenario illustrating embodiments of a communications network.
- Fig. 4: is a flowchart depicting embodiments of a method performed by a first core network node.
- Fig. 5: is a schematic cell diagram illustrating an example of inter-RAT paging.
- Fig. 6: is a schematic block diagram illustrating a first core network node according to some embodiments herein.
- Fig. 7: illustrates a telecommunication network connected via an intermediate network to a host computer in accordance with some embodiments;
- Fig. 8: illustrates a host computer communicating via a base station with a user equipment over a partially wireless connection in accordance with some embodiments;
- Fig. 9: illustrates methods implemented in a communication system including a host computer, a base station and a user equipment in accordance with some embodiments;
- Fig. 10: illustrates methods implemented in a communication system including a host computer, a base station and a user equipment in accordance with some embodiments;
- Fig. 11: illustrates methods implemented in a communication system including a host computer, a base station and a user equipment in accordance with some embodiments; and
- Fig. 12: illustrates methods implemented in a communication system including a host computer, a base station and a user equipment in accordance with some embodiments.

### DETAILED DESCRIPTION

While a UE is in the border of two RATs, there will be a ping-pong effect of getting registered between the two RATs. However, this issue may being solved by allowing cells of one RAT in the tracking area update list of another RAT, and hence minimizing the number of updates. The concept of lists, which helps in minimizing the number of updates, would add complexity in how to search and find an idle UE at the time of paging. Embodiments herein provide a solution for an efficient inter-RAT paging system.

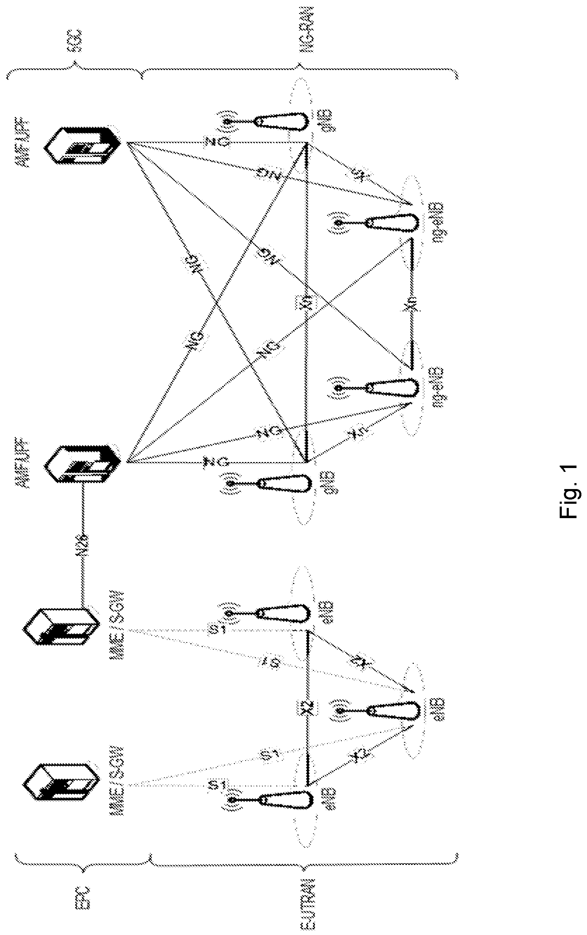

Fig. 1 is a schematic overview depicting a network architecture for an EPS, e.g. E-UTRAN and EPC, and 5GS, e.g. NG-RAN and 5G Core (5GC) where the embodiments herein may be employed.

3GPP introduces both a new core network, e.g. 5GC, and a RAT, e.g. NR, in the 5G system (5GS). However, the core network will also support other RATs than NR, such as E-UTRA. As shown in Fig. 1, the network architecture for EPS comprises an E-UTRAN comprising LTE nodes, e.g. eNBs, which are connected to EPC. Fig. 1 also shows the network architecture for 5GS comprising an NG-RAN comprising LTE nodes, e.g. ng-eNBs, and NR nodes, e.g. gNBs, which are connected to 5GC.

The LTE nodes connected to EPC can be interconnected through the X2 interface, while the NG-RAN nodes connected to 5GC can be interconnected through the Xn interface, as shown in Fig. 1. 3GPP has also introduced an interface between the Mobility Management Entity (MME) in EPC and the Access and Mobility Management Function (AMF) in 5GC called N26, which enables interworking between EPC and 5GC. Fig. 1 shows the N26 interface between one MME and AMF, however, the N26 interface may exist between any number of MMEs and AMFs.

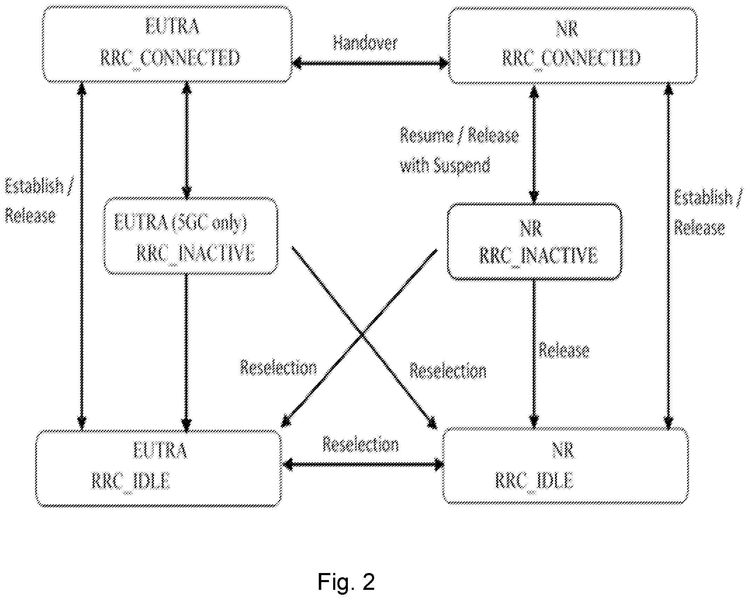

It will now be described how a UE can move between different states and activities in an environment with two different RATs associated with NR and EUTRA, respectively. Fig. 2 is a state diagram illustrating a UE state machine and state transitions between NR/5GC, E-UTRA/EPC and E-UTRA/5GC. A Radio Resource Control (RRC)_INACTIVE state and the associated state transitions are only available for NR/5GC and E-UTRA/5GC. The RRC state RRC_INACTIVE was introduced in 3GPP Release-15 for both NR and LTE/5GC. In RRC_INACTIVE state, the UE stores certain configurations, e.g. Data Radio Bearer (DRB) configurations and physical layers parameters. When the UE needs to resume the connection to the network, it transmits an RRCConnectionResumeRequest or RRCResumeRequest/RRCResumeRequest1. The UE may then reuse the stored configurations and reduce the time and signaling needed to properly operate in RRC_CONNECTED, as when in RRC_INACTIVE state the security and CN connection are restored upon resume of the UE. Thus when in RRC_INACTIVE, the connection from RAN to CN for the UE is kept. At resume it is possible to reduce the time and signaling needed to operate in RRC_CONNECTED.

In NR, an RRC Connection Resume procedure may be initiated by the UE sending an RRCResumeRequest, including a short I-Radio Network Temporary Identifier (I-RNTI) of 24 bits, or an RRCResumeRequest1, including a full I-RNTI of 40 bits. The I-RNTI is used to identify the UE context in RRC_INACTIVE. A UE may select an RRCResumeRequest1, which is sent on the logical Common Control Channel (CCCH1), if the cell where the UE is camped on broadcasts System information Block (SIB1) with presence of useFullResumelD IE (true). Otherwise, the UE may initiate an RRC Connection Resume procedure with RRCResumeRequest, sent on the CCCH.

A UE in RRC_INACTIVE state in one RAT and performing cell reselection to another RAT may be triggered to release its Access Stratum (AS) context, enter an RRC_IDLE state in the reselected RAT and perform a registration area update.

The following section concerns RRC Release and Radio access node Notification Areas (RNAs).

To suspend a UE from RRC_CONNECTED state to RRC_INACTIVE state, the last serving node prepares for the UE an RRC Release message which contains configurations for the RRC_INACTIVE state. In NR, this message is the RRC Release message with the suspendConfig which contains configurations for a RNA, which comprises one of the following choices:
1) A list of cells
2) A list of "RAN Area Config"

The list of "RAN Area Config" can either be:
2.1) a list of RAN Area Codes (RANACs) and associated Tracking Area Code (TAC)
2.2) a list of Tracking Area Code

The "RAN Area Config" is encoded in RRC NR as follows:

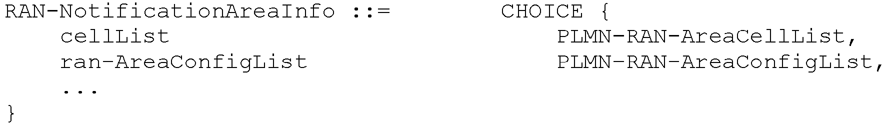

First, the serving node needs to choose between cellList or ran-AreaConfigList. In the case of cellList, it is possible to signal a common Public Land Mobile Network (PLMN) for a list of cells, or different PLMNs per cell.

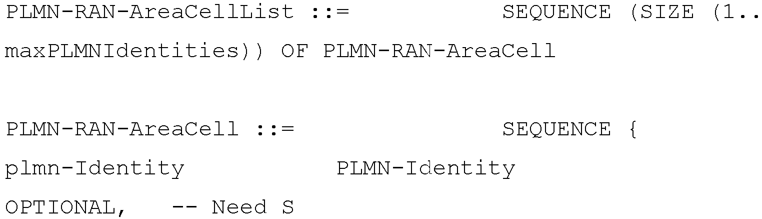

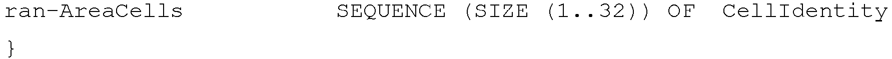

Each RAN area configuration in the list has a TAC. Hence, the NG-RAN may configure the UE with a list of Tracking Area Identifiers TAls, i.e. a TAC and a PLMN, or a list of RAN Area Identifiers where each RAN Area Identifier comprises a TAC and a RANAC. The TAI comprises a Mobile Country Code (MCC), a Mobile Network Code (MNC), and a TAC.

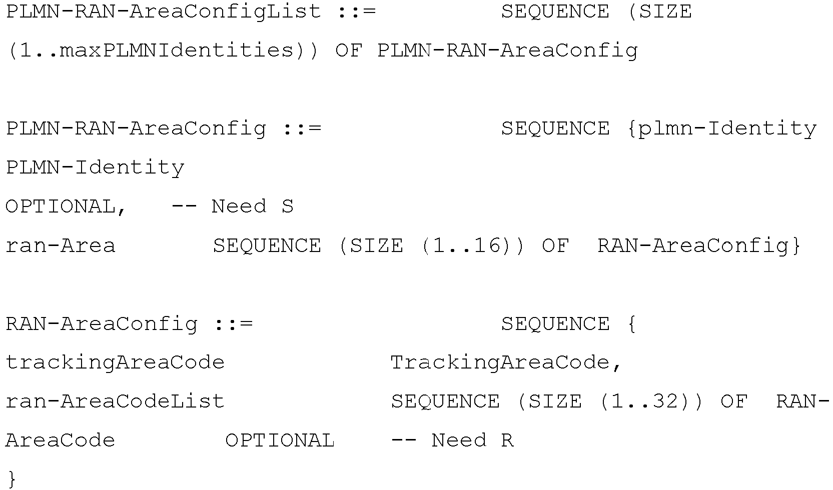

Whenever a UE in RRC_INACTIVE state reselects to a new cell, e.g. based on measurements on signals from the cells, the UE checks whether the target cell belongs to the configured RNA by checking the system information, e.g. SIB1, broadcasted from the target cell. If the SIB1 contains the cell identity or the RANAC included in the RNA list of cells or RANACs respectively, the UE will remain in RRC_INACTIVE state without performing any signaling. Since the NG-RAN is aware that the UE is configured with a set of cells and/or RANACs, the UE does not need to inform the network as long as it remains within the RNA. If the network needs to page the UE, e.g. due to some incoming downlink data or a voice call directed to the UE, the core network will address the source node, which has suspended the UE, and the source node may perform a RAN paging across the cells inside the RNA. In the case the RNA is made up of cells belonging to different NG-RAN nodes, the source NG-RAN node will send an XnAP paging message to the other NG-RAN nodes serving the RNA so that these NG-RAN nodes can page the UE within their own cells. Since the NG-RAN node only pages in the RNA, it is advantageous for the NG-RAN to know when the UE moves outside the configured RNA configuration for reachability purposes.

However, if the UE reselects a new NR cell which does not belong to the RNA configuration stored at the UE, e.g. based on cell Id or TAC/RANAC, the UE may need to initiate an RRC Connection Resume procedure by sending an RRCResumeRequest/RRCResumeRequest1 message. This message may be sent either to perform a RAN Area Update, i.e. with ResumeCause value ranAreaUpdate, or to perform a Non-Access Stratum (NAS) procedure, e.g. Tracking/Registration Area Update, by transmitting a resume request message with the ResumeCause in accordance with the NAS message, which may occur in case the UE leaves a cell and enters both a new RAN area and new registration area. In either case, the network may decide upon reception of the Resume Request message whether to keep the UE in RRC_CONNECTED state, or to release the UE to move back to RRC_INACTIVE state with updated configurations, or to transition the UE to RRC_IDLE state. Other options are also possible, e.g. to reject the UE for a certain wait time, in case of overload in the network.

Regarding RRC Release messages in NR, as can be seen below, the RRCRelease message in NR comprises a suspendConfig Information Element (IE). The suspendConfig includes the configuration of an RAN Notification Area (RNA) which comprises either a list of cells, or a list of RAN Area Config, which in turns contains a Tracking Area Code and optionally a RANAC.

The message RRCRelease in NR, TS. 38.331 v 15.4.0 is depicted below:

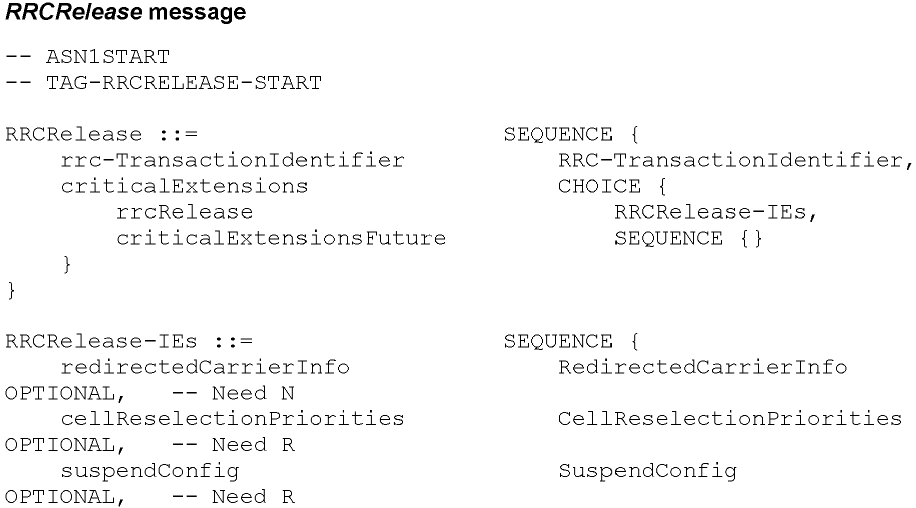

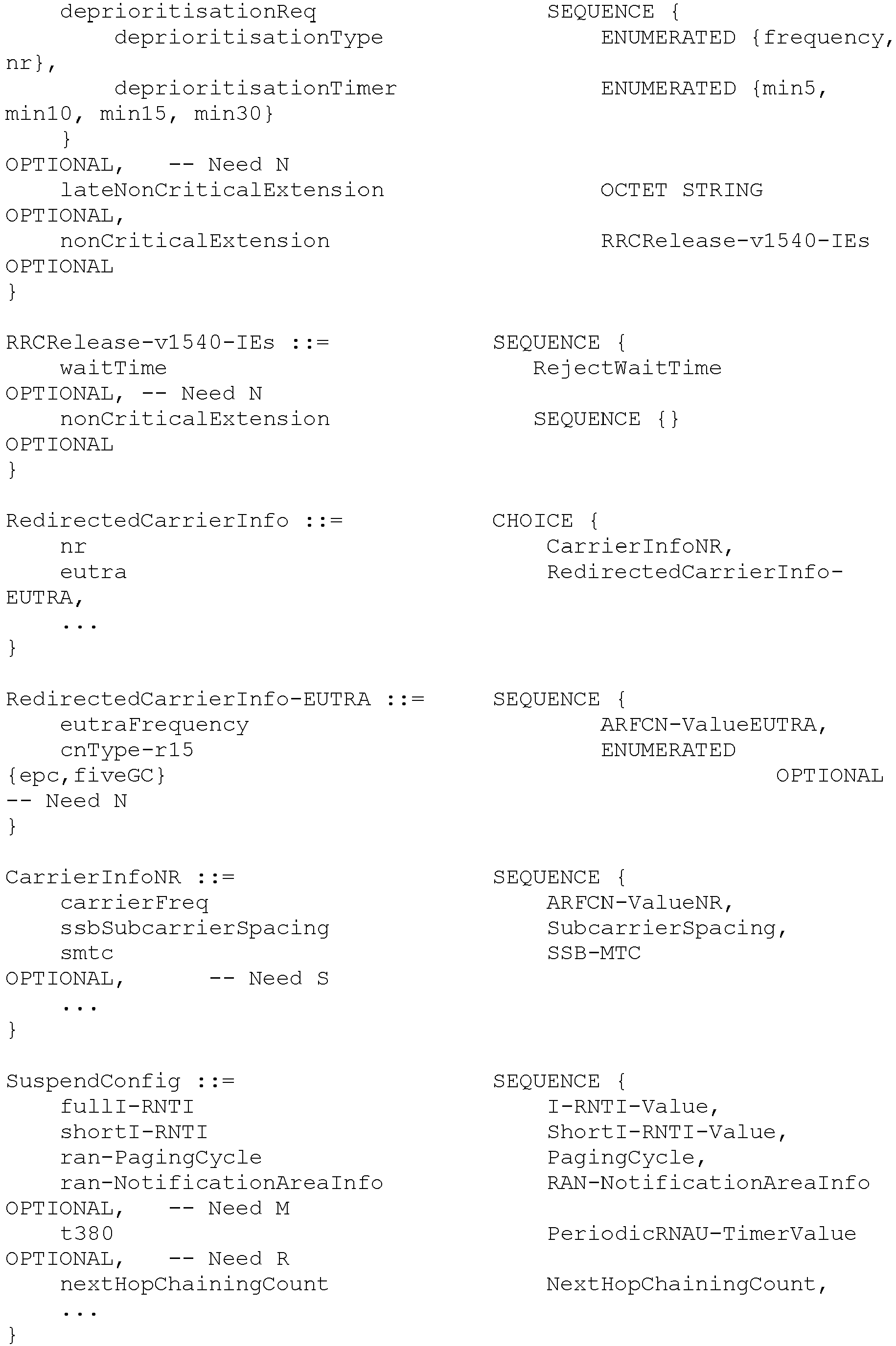

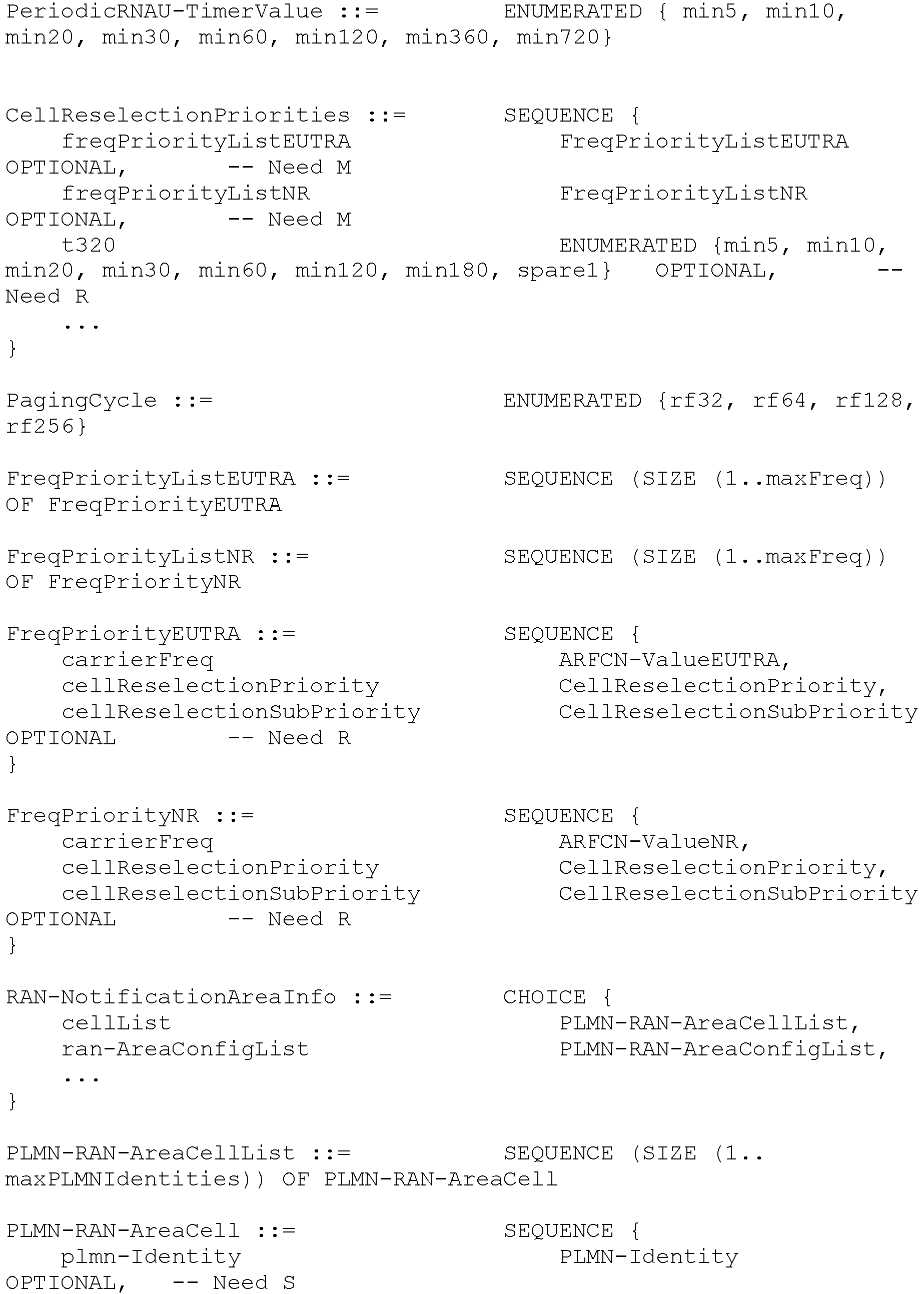

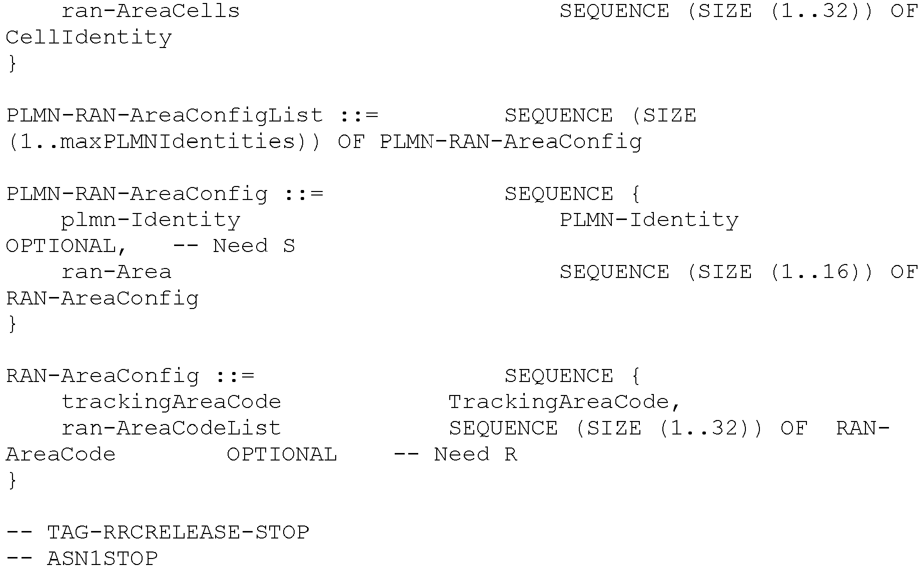

Regarding the current inter-working mechanism for RRC_IDLE state and RRC_INACTIVE state between 3GPP systems, it has been discussed in 3GPP Release 15 what kind of inter-RAT mobility would be supported when the UEs are in RRC_IDLE state and/or RRC_INACTIVE state.

Regarding Inter-RAT mobility in RRC_IDLE state, a UE in RRC_IDLE state in NR and connected to 5GC, upon reselecting to an LTE cell, may enter RRC_IDLE state in LTE.

If the target LTE cell is connected to 5GC with only a 5GC TAC associated, that TAC may either be part of the UE's TAI list or not. In other words, the UE may either trigger a Registration Area Update or not, depending whether the LTE cell is in its TAI list.

In the case the target LTE cell is connected to EPC only, and not included in the UE's TAI list, a Tracking Area Update (TAU) may always be needed since the cell is served by a different core network. EPC NAS only supports a 16 bits TAC, while 5GC has a 24 bits TAC. In other words, upon entering RRC_IDLE state in EPC, there may always be a Tracking Area Update to be triggered. No paging between the core networks of 5GC and EPC is supported in current procedures.

In the case the target cell is an LTE cell connected to both EPC and 5GC, as long as at least one of the TACs is in the UE's TAI list, there may be no Registration/Tracking Area Updates performed, i.e., no signalling occurs.

Regarding Inter-RAT mobility in RRC_INACTIVE state, a UE in RRC_INACTIVE state in NR, upon reselecting to an LTE cell, may enter RRC_IDLE state in LTE.

If the target LTE cell is connected to 5GC, with only a 5GC TAC associated, that may either be part of the UE's TAI list or not. In other words, the LTE cell is in its TAI list.

In the case the UE is in RRC_INACTIVE state in NR and performs inter-RAT cell reselection to an LTE cell, the UE always transition to RRC_IDLE state in LTE, regardless if that LTE cell is an LTE EPC only cell, or an LTE 5GC only cell or a cell supporting both LTE 5GC/EPC.

According to current proceedings regarding Inter-RAT Cell reselection in RRC_INACTIVE state, upon cell reselection to an E-UTRA/EPC cell, the UE which is suspended to RRC_INACTIVE state discards the stored UE Access Stratum (AS) inactive context and any configuration for RRC_INACTIVE state, in accordance with current TS 38.304. The UE performs tracking area update or registration update in EPC.

Location management in mobile communication systems is concerned with those network functions necessary to allow the UE to be reached whenever it is idle, e.g. in RRC_IDLE state, but located in the network coverage area. In that case, it may be problematic and challenging to reach the UE when the idle UE is moving around. In case of multi-RAT nodes, for example, the same geographical node location may belong to two RATs, e.g. NR and E-UTRA. The current design of tracking areas in LTE and NR takes the idle and/or inactive UEs of these two RATs separately. However, there may be an inactive UE performing a Tracking Area Update just because it is located at the border between the two RATs and in most cases in the coverage of a dual RAT node, e.g. eNB/gNB. Therefore, the challenge may not only be due to the idle UEs movement, but it may happen to a stationary UE while facing a change in some physical radio property, also referred to as radio conditions.

A UE in the RRC_INACTIVE state, upon cell reselection to another RAT, may discard the stored AS inactive context and any configuration for RRC_INACTIVE state. This is unreasonably costly in cases when the conditions for cell reselection are valid for a short period of time.

Moreover, when the UE resides at the border between two RATs, e.g. between NR and E-UTRA/EPC or between NR and E-UTRA/5GC, there may be many updates happening due to the ping-pong effect either by the movement of the UE or the change in the radio channel environment. This negatively impacts both the UE battery life time and the overall network signaling overhead.

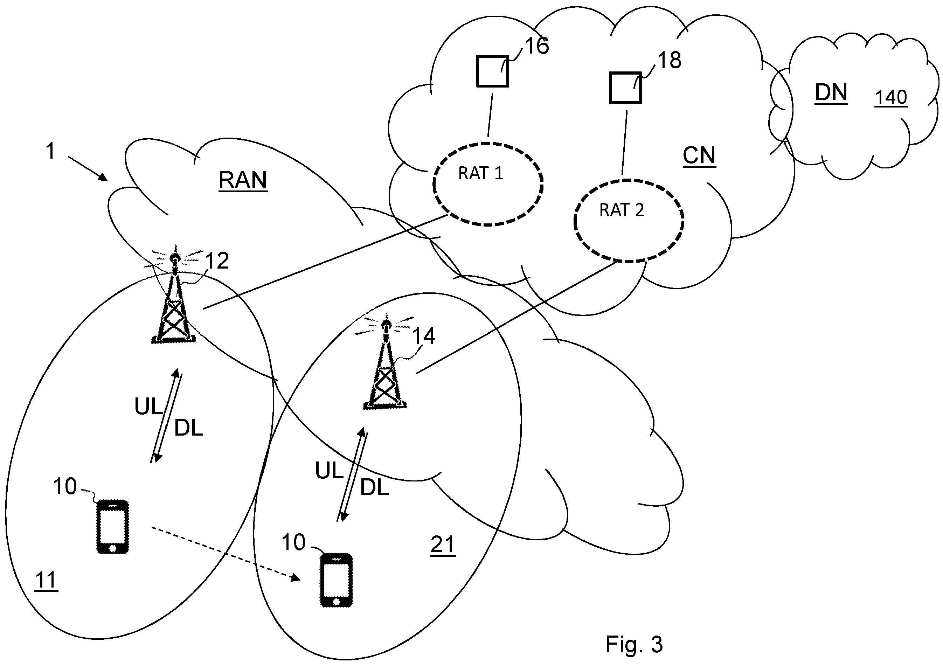

Embodiments herein relate to wireless communications networks in general. **Fig. 3** is a schematic overview depicting a wireless communications network, such as a **wireless communications network 1.** The wireless communications network 1 comprises one or more Radio Access Networks (RANs) and one or more Core Networks (CNs). The wireless communications network 1 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the wireless communications network 1, a UE 10 is present. The UE 10, may e.g. be a wireless device such as a mobile station, a non-access point (non-AP) station (STA), a STA and/or a wireless terminal, communicating via e.g. one or more Access Networks (ANs), e.g. RANs, to one or more CNs. It should be understood by the skilled in the art that "UE" is a non-limiting term which means any terminal, wireless communications terminal, user equipment, Narrowband Internet of Things (NB-IoT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node.

The wireless communication network 1 comprises a first RAN node 12 providing radio coverage over a geographical area, also called a service area, e.g. a **cell 11,** of a first RAT, such as NR, LTE or similar. The wireless communication network 1 further comprises a **second RAN node 14** providing radio coverage over another geographical area, or service area, e.g. a **cell 21,** of a second RAT, such as NR, LTE or similar. Each of the first RAN node 12 and the second RAN node 14 may provide a transmission point and a reception point, and may be implemented as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the first or second RAN nodes, 12 and 14 respectively, depending e.g. on the RAT and terminology used. The first RAN node 12 and the second RAN node 14 may each be referred to as a serving radio network node wherein a service area may be referred to as a serving cell, and the serving network node communicates with the wireless device in form of downlink (DL) transmissions to the wireless device and uplink (UL) transmissions from the wireless device. It should be noted that a service area may sometimes also be denoted as cell, beam, beam group or similar, to define an area of radio coverage.

The first RAN node 12 and/or the second RAN node 14 may be an AMF, which controls the base stations. The wireless communication network 1 comprises **a first core network node 16 and a second core network node 18.** The first and/or second core network node, 16 and 18 respectively, may be an MME which is a control node for an LTE access network, a Serving Gateway (SGW), and a Packet Data Network Gateway (PGW). An MME is amongst other responsible for tracking and paging procedures including retransmissions. The MME and the AMF may communicate via the N26 interface, as shown in Fig. 1.

The various activities and operations according to embodiments herein may be performed by the first core network node 16, as an illustrative example. As an alternative, a Distributed Node **(DN)** and functionality, e.g. comprised in **a cloud 140** as shown in Fig. 3 may be used for performing or partly performing the methods and actions described herein.

According to embodiments herein the first core network node 16, serving a first RAT, receives an incoming communication addressed to the UE 10. The first core network node 16 detects that the UE 10 has a dual registration in the first RAT and second RAT. The first core network node 16 then transmits a paging notification to the second core network node 18 serving the second RAT as an instruction to page the UE 10 in the second RAT, thereby enabling paging of the UE 10 in both the first RAT and the second RAT of the wireless communication network 1. An advantage with embodiments herein is that the UE 10 may be subscribed to both NR and E-UTRA networks, i.e. the UE has a dual registration, and can be paged via two networks that could be associated with different priorities or preferences. Another considerable advantage is that the UE does not need to perform a Tracking Area Update (TAU)/Attach/Registration Area Update request procedure or a Registration request procedure every time when switching between RATs, thus saving much signalling and battery consumption. A further advantage is that the network may collect the profile of the UE movement between RATs which is beneficial for incoming DL data connections in paging.

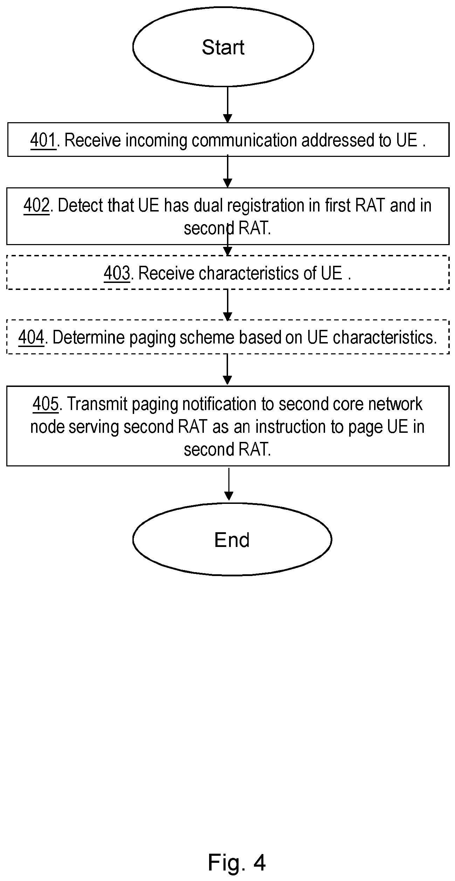

Some actions that may be performed by the first core network node 16 serving the first RAT, for enabling paging of the UE 10 in the wireless communication network according to embodiments herein, will now be described with reference to a flowchart depicted in **Fig. 4** and with further reference to the communication scenario in Fig. 3. The actions do not have to be taken in the order stated below, but may be taken in any suitable order. Optional actions that may be performed in some embodiments are marked with dashed boxes.

**Action 401.** The first core network node 16 receives an incoming communication addressed to the UE 10. The incoming communication may e.g. be received due to some incoming downlink data or a voice call directed or addressed to the UE.

**Action 402.** The first core network node 16 then detects that the UE 10 has a dual registration in the first RAT and in a second RAT. In some embodiments the detecting may comprise checking a current registration status of the UE 10 in one or both of the first and second RATs.

**Action 403.** In some embodiments, the first core network node 16 receives characteristics of the UE 10. The characteristics, which in the claimed invention, are reported by the UE 10 or , in other examples not forming part of the claimed invention, are indicated at the network based on UE 10 parameters at the time of location update, comprise any one or more out of speed and acceleration. Other characteristics, not forming part of the claimed invention, are direction and previous history of the UE's movement based on its background profile.

**Action 404.** In some embodiments, the core network node 16 determines a paging scheme based on the UE 10 characteristics. The determined paging scheme may later be included in a paging notification. The paging scheme may be defined in order to search for the UE 10, for example in the last visited cell, in the gNBs of the 5G RNA or in the eNBs of the 4G TA.

**Action 405.** When it has been detected that the UE 10 has a dual registration in the first RAT and second RAT, the first core network node 16 transmits the paging notification to the second core network node 18, serving the second RAT, as an instruction for the second core network node 18 to page the UE 10 in the second RAT. Thereby paging of the UE 10 is enabled in both the first RAT and the second RAT of the wireless communication network. The paging notification may be transmitted over an N26 interface to the second core network node 18. In some embodiments, when a page response has been received from the UE 10 in the second RAT, the incoming communication is forwarded to the second core network node 18.

Some of the embodiments herein, as mentioned above, will now be further described and exemplified. The text below is applicable to and may be combined with any suitable embodiment(s) described above.

3GPP TS23.501 section 5.17.2.3.3 describes mobility for UEs in dual-registration mode.

Embodiments herein may be considered according to the following UE and network perspectives:
1. Network perspective: Upon transitioning the UE 10 to inactive state, the NR network preserves the AS inactive context for a certain time. When the time expires the NG-RAN considers the UE as lost.
2. UE perspective: Upon reselection of an E-UTRA cell, the UE preserves its AS inactive context as separate context while the UE enters E-UTRA RRC_IDLE state. The UE keeps two concurrent states: NR RRC_INACTIVE state and E-UTRA RRC_IDLE state. The UE is not required to be able to receive paging in 5GC/NR when camping on E-UTRA/EPC.

Furthermore, the UE 10 may override the periodic RNA update timer, e.g. t380, to t380Dual, that may be a configurable timer sent to the UE 10 or a fixed defined timer. Upon expiration of the t380Dual timer the UE may send the indication of t380Dual expiration towards the camping RAT on which it is camped on to update its location.

Embodiments herein may be used to enhance the concept of lists, e.g. cell/TA code or RANAC lists, from one RAT to two RATs. When the UE 10 registers to a new RAT, it can keep a combination of two RATs list, either as one list for all RATs or multiple lists for the respective RATs. For paging, the network can have a predefined rule of prioritizing one RAT list compared to another RAT list, or setup different timers for the respective RATs depending on the scenario.

The N26 interface, between AMF and MME, can be enhanced to allow intersystem paging for dual registration. The interface between EPC and 5GC may be enhanced to allow forwarding of CN paging from AMF to MME, or vice versa. Paging may be triggered by either the E-UTRA- or NR network. The UE 10 may be paged via two networks sequentially or simultaneously e.g. the UE 10 monitors an E-UTRA paging channel upon reselecting to an E-UTRA cell. Mutually, upon reselecting to an NR cell the UE 10 monitors an NR paging channel. This is specifically useful when considering a dual-RAT network deployment.

In the following section a paging procedure will be described when at least some of the embodiments herein are employed. Paging may happen simultaneously, sequentially or in a round fashion of prioritizing the neighboring cells of the last visited cell. If the dual registration is already set up, it can be torn down when the UE responds to paging to a cell which is far from the border between two RATs.

While it may be useful to reduce the number of updates and/or registrations, it may also be useful not to increase the paging search space resulting from the extension of the TA area or list. According to embodiments herein, the first core network node 16 receives an incoming communication addressed to the UE 10. The incoming communication may e.g. be received due to an incoming downlink data or a voice call. The first core network node 16 then detects that the UE 10 has a dual registration in the first RAT and second RATs. The first core network node 16 transmits the paging notification to the second core network node 18, serving the second RAT, as an instruction to page the UE 10 in the second RAT. Thereby paging of the UE 10 is enabled in both the first RAT and the second RAT of the wireless communication network.At the time of paging it is beneficial to minimize the number of cells which are paging the UE 10 in the two RATs. Potentially, there could be three categories of cells which can be engaged in the paging procedure:
1. Cells belonging only to the first RAT (e.g. gNBs)
2. Cells belonging only to the second RAT (e.g. eNBs)
3. Cells belonging to the first RAT and the second RAT (e.g. ng-eNB, en-gNB)

For the first two categories above, the paging procedure can follow the conventional procedure and it can even happen at the same time, while it is still useful to be decided by the network to prioritize one RAT to minimize the overall network signaling overhead. While for the third category above, the paging in the first RAT and the second RAT may take place sequentially depending on the UE 10 characteristics. As described above, the UE 10 characteristic which , in the claimed invention, are reported by the UE 10 or, as also possible, but not forming part of the claimed invention, are indicated at the network based on UE parameters at the time of location update, comprise any one or more out of speed and direction. Other possible parameters, which however do not form part of the claimed invention, are acceleration, previous history of UE's movement based on its background profile, etc.

In the claimed invention, the UE 10 is categorized or classified into a slow- and fast-moving UE based on predefined speed thresholds, e.g. the UE is categorized as slow-moving when moving slower than a certain speed threshold while the UE is categorized as fast-moving when moving faster than the speed threshold.

In case of a slow-moving UE, dual registration might be set up and the UE 10 keeps two RATs context otherwise the UE completely falls into the second RAT, e.g. new RAT, without any history of its previous existence in the first RAT, e.g. old RAT. The new RNA TA list, e.g. the RNA TA list belonging to the second RAT, may be included in the UE's 10 TA list, otherwise the UE 10 may fall into the 4G network without any history of its previous existence in the old network.

In case the UE 10 is defined as a fast-moving UE and based on network estimation there is low probability that the UE 10 goes back to the old RAT, e.g. the first RAT. Therefore, the core in the second RAT may decide not to set up dual registration.

When the UE 10 is categorized as fast-moving, the paging process may follow a simple mechanism, e.g. a paging scheme, of paging all the cells in the TA or TA list of the UE 10 simultaneously. While if the UE 10 is categorized as slow-moving, then in case of paging there may be a predefined paging mechanism defined in order to search for the UE 10, such as for example:
- In the last visited cell
- In the gNBs of the 5G RNA
- In the eNBs of the 4G TA

How far in time the UE 10 has reported its last visited cell may change the rules of how the paging procedure can happen. E.g. if it is registered long ago then the probability of the UE 10 being in the last visited cell is very low and there is no reason to only page that cell at the beginning.

The sequential paging of the cells may increase the response time of the searching process and this searching time should not be more than a certain threshold otherwise the call may be lost.

When the UE 10 is not found in the last visited cell, the 4G network may update the 5G core to release the suspension of the UE in 5G and searching for it in the last registered RNA.

When the UE 10 is found during paging, the UE 10 may move from idle mode to active mode and until being active there may not be any mobility management procedure, as the UE 10 may do a handover procedure within the border of 4G and 5G.

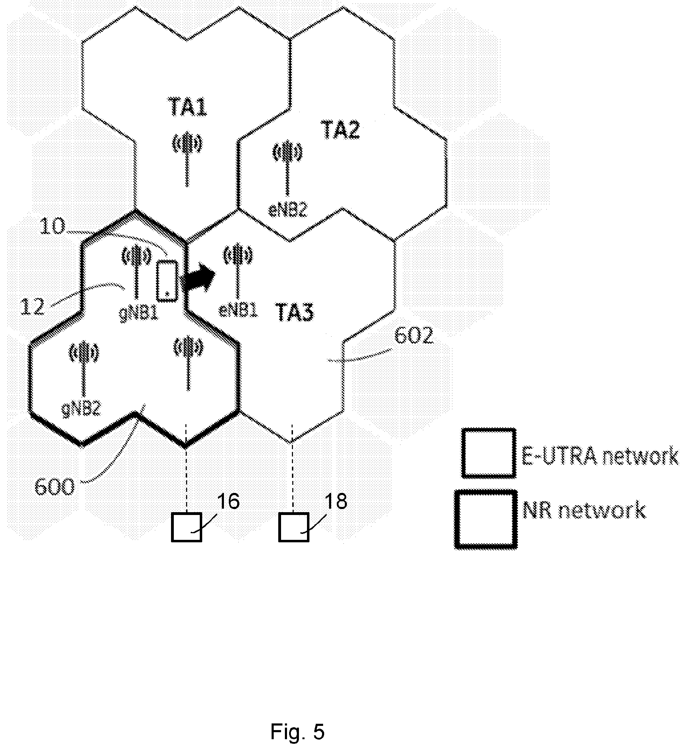

Fig. 5 illustrates an example of a paging procedure that could be used when a UE 10 employs inter-RAT mobility between cells of different RATs. In this example, the UE 10 has a dual registration to both a first RAT 600 served by a first core network node 16 and a second RAT 602 served by a second core network node 18. The UE 10 is located on or close to a radio coverage border of the first RAT 600 and the second RAT 602, where the second RAT is shown as TA3. The first RAT may be either 5G or 4G, i.e. either NR or E-UTRA. The UE 10 may thus be in RRC_INACTIVE state in NR or E-UTRA. In this example, the first RAT 600 is related to 5G and the second RAT 602 is related to 4G. The UE 10 selects or reselect to Inter-RAT (I-RAT) cells connected to E-UTRA core network, i.e. the UE 10 moves from the first RAT related to 5G to the second RAT related to 4G.

According to embodiments herein the dual connected UE 10 has moved from gNB1 in the first RAT 600 to eNB1 in the second RAT 602 and the first core network node 16 receives an incoming communication addressed to the UE 10.The UE 10 may send an update message to the first core network node 16 and may report the following information:
- The last visited cell;
- UE characteristics, e.g. comprising speed, direction, acceleration or even a previous history of UE's movement based on its background profile.

The UE characteristics may be available at the UE 10 based on Inertial Measurement Unit (IMU) sensors such as accelerometer, gyroscope, magnetometer, etc. available in the UE 10. The UE 10 may provide these measurements within its TAU uplink message or at minimum just provide an indication in its uplink message that it is for example a fast-moving UE.

In case the UE is categorized as a fast moving UE and based on network estimation there is low probability that the UE 10 goes back to the previous cell, NR network. There may be no data from 5G RRC connection suspended in either the UE or NR network cell, while in case the UE 10 has high probability to come back to the NR network cell, then the 5G RRC connection would be suspended in both the UE 10 and NR network cell (i.e. gNB).

Based on the UE characteristics, the EPC may decide to provide a list of TAs taking the UE characteristics into account. In case of having a slow-moving UE, the 5G RNA would be included in the UE's 10 Tracking Area (TA) list, otherwise the UE 10 completely falls into the 4G network without any history of its previous existence in the NR network.

In case the UE 10 is being paged when there is no NR network connection, then E-UTRA would start paging the UE 10 in conventional E-UTRA fashion. Otherwise, there is a possibility that the UE would be paged both in E-UTRAN and NG-RAN simultaneously.

In one example, the network may continue the paging process according to a predefined timer T. In another example, the search may go on according to a certain number of sequential lists of cells to be paged. In a further example, the search may go on until all cells of the UE's 10 TA List have been simultaneously or sequentially paged. In the two former cases, when the UE 10 is not found after expiry of the predefined timer T or paging in the lists of cells, respectively, then the network may cancel the call.

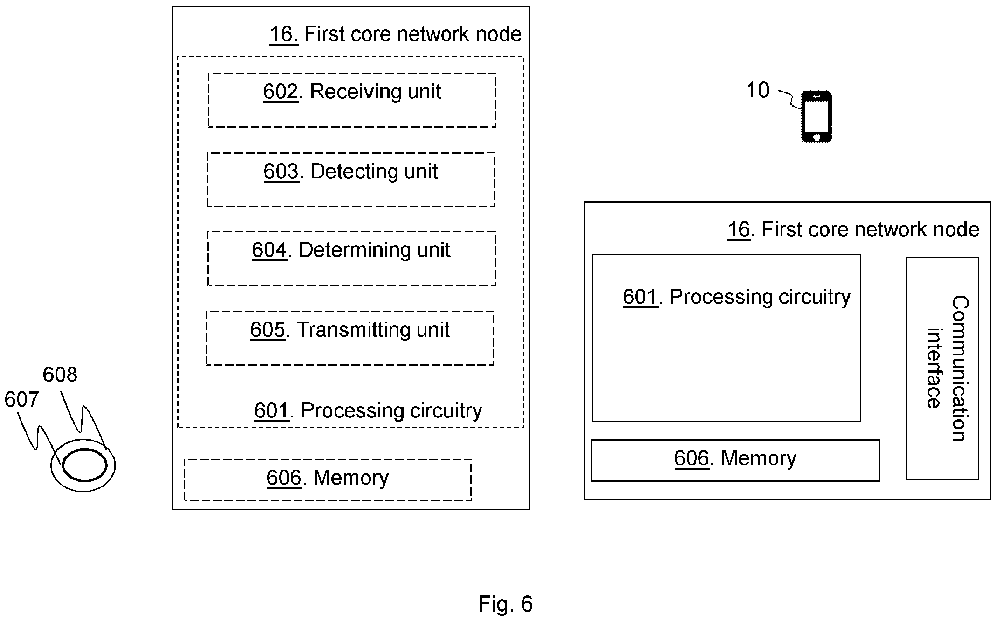

**Fig. 6** is a block diagram depicting the first core network node 16 serving the first RAT, for enabling paging of the UE 10 in the wireless communication network according to embodiments herein.

The first core network node 16 may comprise **processing circuitry 601,** e.g. one or more processors, configured to perform the methods herein.

The first core network node 16 may comprise a **receiving unit 602.** The first core network node 16, the processing circuitry 601, and/or the receiving unit 602 may be configured to receive an incoming communication addressed to the UE 10.

The first core network node 16, the processing circuitry 601, and/or the receiving unit 602 may be configured to receive characteristics of the UE 10.

The first core network node 16 may comprise a **detecting unit 603.** The first core network node 16, the processing circuitry 601, and/or the detecting unit 603 may be configured to detect that the UE 10 has a dual registration in the first RAT and in the second RAT. The detecting may be adapted to comprise to check the current registration status of the UE 10 in one or both of the first and second RATs.

The first core network node 16 may comprise a **determining unit 604.** The first core network node 16, the processing circuitry 601, and/or the determining unit 604 may be configured to determine a paging scheme based on the UE 10 characteristics, wherein said paging notification is adapted to comprise the determined paging scheme.

The first core network node 16 may comprise a **transmitting unit 605.** The first core network node 16, the processing circuitry 601, and/or the transmitting unit 605 is configured to transmit the paging notification to the second core network node 18 serving the second RAT as an instruction to page the UE 10 in the second RAT, thereby paging of the UE 10 in both the first RAT and the second RAT of the wireless communication network is enabled. The paging notification may be adapted to be transmitted over the N26 interface to the second core network node 18.

When a page response has been received from the UE 10 in the second RAT, the incoming communication may be adapted to be forwarded to the second core network node 18.

The first core network node 16 further comprises **a memory 606.** The memory 606 comprises one or more units to be used to store data on, such as radio signals, paging notifications, UE characteristics, instructions, input/output data, metadata, etc. and applications to perform the methods disclosed herein when being executed, and similar. The first core network node 16 may further comprise a communication interface comprising e.g. one or more antenna or antenna elements.

The method according to the embodiments described herein for the first core network node 16 is implemented by means of e.g. **a computer program product 607** or a computer program, comprising instructions, i.e., software code portions, which, when executed on at least one processor, cause the at least one processor to carry out the actions described herein, as performed by the first core network node 16. The computer program product 607 may be stored on **a computer-readable storage medium 608,** e.g. a disc, a universal serial bus (USB) stick or similar. The computer-readable storage medium 608, having stored thereon the computer program product, may comprise the instructions which, when executed on at least one processor, cause the at least one processor to carry out the actions described herein, as performed by the first core network node 16. In some embodiments, the computer-readable storage medium may be a transitory or a non-transitory computer-readable storage medium.

In some embodiments a more general term "network node" is used and it can correspond to any type of radio-network node or any network node, which communicates with a wireless device and/or with another network node. Examples of network nodes are gNodeB, eNodeB, NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any radio access technology (RAT) or multi-RAT systems, where the devices receives and/or transmit signals, e.g. data, such as New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a UE or RAN node, for example.

Alternatively, several of the functional elements of the processing units discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims and their legal equivalents.

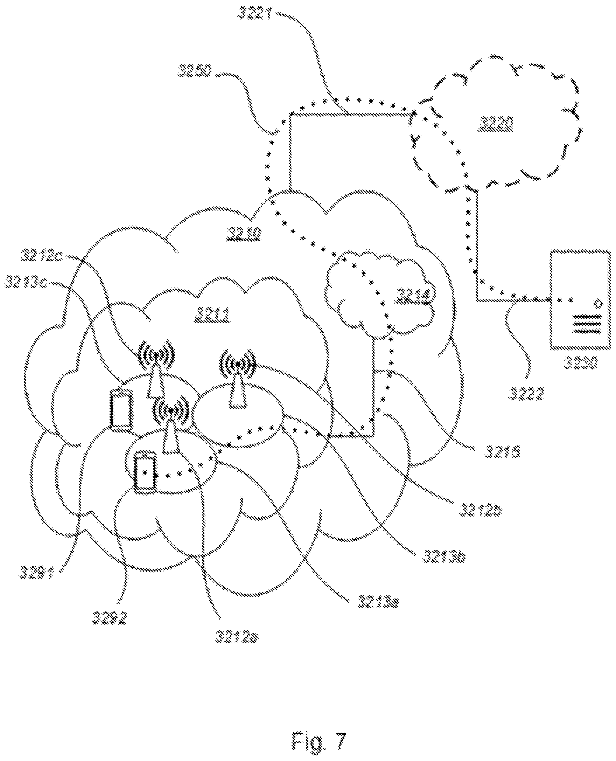

**Fig. 7** shows a Telecommunication network connected via an intermediate network to a host computer in accordance with some embodiments. With reference to Fig. 7, in accordance with an embodiment, a communication system includes telecommunication network 3210, such as a 3GPP-type cellular network, which comprises access network 3211, such as a radio access network, and core network 3214. Access network 3211 comprises a plurality of base stations 3212a, 3212b, 3212c, such as NBs, eNBs, gNBs or other types of wireless access points being examples of the RAN nodes12 and 14 above, each defining a corresponding coverage area 3213a, 3213b, 3213c. Each base station 3212a, 3212b, 3212c is connectable to core network 3214 over a wired or wireless connection 3215. A first UE 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example being examples of the wireless device 10 above, the disclosed embodiments are equally applicable to a situation where a sole UE is in the coverage area or where a sole UE is connecting to the corresponding base station 3212.

Telecommunication network 3210 is itself connected to host computer 3230, which may be embodied in the hardware and/or software of a standalone server, a cloud-implemented server, a distributed server or as processing resources in a server farm. Host computer 3230 may be under the ownership or control of a service provider, or may be operated by the service provider or on behalf of the service provider. Connections 3221 and 3222 between telecommunication network 3210 and host computer 3230 may extend directly from core network 3214 to host computer 3230 or may go via an optional intermediate network 3220. Intermediate network 3220 may be one of, or a combination of more than one of, a public, private or hosted network; intermediate network 3220, if any, may be a backbone network or the Internet; in particular, intermediate network 3220 may comprise two or more sub-networks (not shown).

The communication system of Figure 7 as a whole enables connectivity between the connected UEs 3291, 3292 and host computer 3230. The connectivity may be described as an over-the-top (OTT) connection 3250. Host computer 3230 and the connected UEs 3291, 3292 are configured to communicate data and/or signaling via OTT connection 3250, using access network 3211, core network 3214, any intermediate network 3220 and possible further infrastructure (not shown) as intermediaries. OTT connection 3250 may be transparent in the sense that the participating communication devices through which OTT connection 3250 passes are unaware of routing of uplink and downlink communications. For example, base station 3212 may not or need not be informed about the past routing of an incoming downlink communication with data originating from host computer 3230 to be forwarded (e.g., handed over) to a connected UE 3291. Similarly, base station 3212 need not be aware of the future routing of an outgoing uplink communication originating from the UE 3291 towards the host computer 3230.

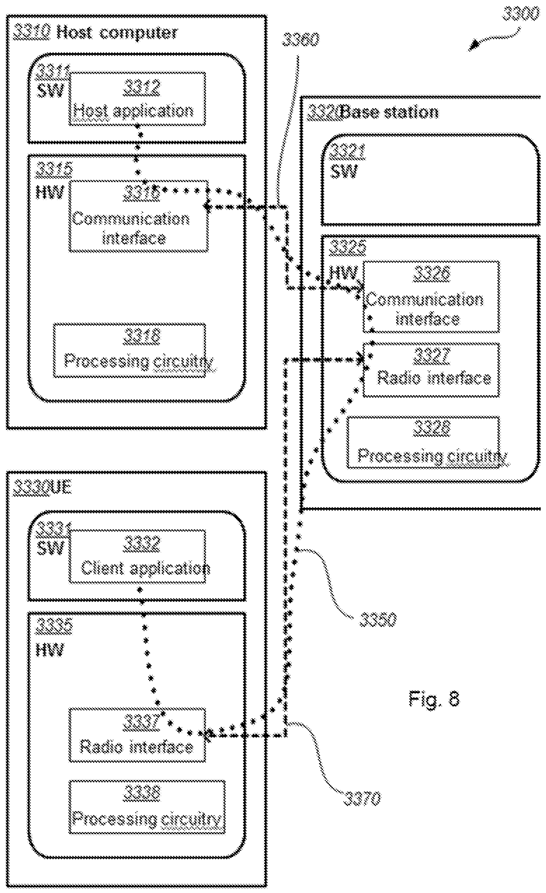

**Fig. 8** shows a host computer communicating via a base station and with a user equipment over a partially wireless connection in accordance with some embodiments

Example implementations, in accordance with an embodiment, of the UE, base station and host computer discussed in the preceding paragraphs will now be described with reference to Fig 8. In communication system 3300, host computer 3310 comprises hardware 3315 including communication interface 3316 configured to set up and maintain a wired or wireless connection with an interface of a different communication device of communication system 3300. Host computer 3310 further comprises processing circuitry 3318, which may have storage and/or processing capabilities. In particular, processing circuitry 3318 may comprise one or more programmable processors, application-specific integrated circuits, field programmable gate arrays or combinations of these (not shown) adapted to execute instructions. Host computer 3310 further comprises software 3311, which is stored in or accessible by host computer 3310 and executable by processing circuitry 3318. Software 3311 includes host application 3312. Host application 3312 may be operable to provide a service to a remote user, such as UE 3330 connecting via OTT connection 3350 terminating at UE 3330 and host computer 3310. In providing the service to the remote user, host application 3312 may provide user data which is transmitted using OTT connection 3350.

Communication system 3300 further includes base station 3320 provided in a telecommunication system and comprising hardware 3325 enabling it to communicate with host computer 3310 and with UE 3330. Hardware 3325 may include communication interface 3326 for setting up and maintaining a wired or wireless connection with an interface of a different communication device of communication system 3300, as well as radio interface 3327 for setting up and maintaining at least wireless connection 3370 with UE 3330 located in a coverage area (not shown in Fig. 8) served by base station 3320. Communication interface 3326 may be configured to facilitate connection 3360 to host computer 3310. Connection 3360 may be direct or it may pass through a core network (not shown in Fig 8) of the telecommunication system and/or through one or more intermediate networks outside the telecommunication system. In the embodiment shown, hardware 3325 of base station 3320 further includes processing circuitry 3328, which may comprise one or more programmable processors, application-specific integrated circuits, field programmable gate arrays or combinations of these (not shown) adapted to execute instructions. Base station 3320 further has software 3321 stored internally or accessible via an external connection.

Communication system 3300 further includes UE 3330 already referred to. Its hardware 3333 may include radio interface 3337 configured to set up and maintain wireless connection 3370 with a base station serving a coverage area in which UE 3330 is currently located. Hardware 3333 of UE 3330 further includes processing circuitry 3338, which may comprise one or more programmable processors, application-specific integrated circuits, field programmable gate arrays or combinations of these (not shown) adapted to execute instructions. UE 3330 further comprises software 3331, which is stored in or accessible by UE 3330 and executable by processing circuitry 3338. Software 3331 includes client application 3332. Client application 3332 may be operable to provide a service to a human or non-human user via UE 3330, with the support of host computer 3310. In host computer 3310, an executing host application 3312 may communicate with the executing client application 3332 via OTT connection 3350 terminating at UE 3330 and host computer 3310. In providing the service to the user, client application 3332 may receive request data from host application 3312 and provide user data in response to the request data. OTT connection 3350 may transfer both the request data and the user data. Client application 3332 may interact with the user to generate the user data that it provides.

It is noted that host computer 3310, base station 3320 and UE 3330 illustrated in Fig. 8 may be similar or identical to host computer 3230, one of base stations 3212a, 3212b, 3212c and one of UEs 3291, 3292 of Fig. 7, respectively. This is to say, the inner workings of these entities may be as shown in Fig. 8 and independently, the surrounding network topology may be that of Fig. 7.

In Fig. 8, OTT connection 3350 has been drawn abstractly to illustrate the communication between host computer 3310 and UE 3330 via base station 3320, without explicit reference to any intermediary devices and the precise routing of messages via these devices. Network infrastructure may determine the routing, which it may be configured to hide from UE 3330 or from the service provider operating host computer 3310, or both. While OTT connection 3350 is active, the network infrastructure may further take decisions by which it dynamically changes the routing (e.g., on the basis of load balancing consideration or reconfiguration of the network).

Wireless connection 3370 between UE 3330 and base station 3320 is in accordance with the teachings of the embodiments described throughout this disclosure. One or more of the various embodiments improve the performance of OTT services provided to UE 3330 using OTT connection 3350, in which wireless connection 3370 forms the last segment. More precisely, the teachings of these embodiments may increase the performance of the UE as the UE may not need to perform the TAU/Attach/Registration Area Update/Registration request procedure every time it toggles between two RATs. This improves the UE battery life time and the overall network signalling overhead.

A measurement procedure may be provided for the purpose of monitoring data rate, latency and other factors on which the one or more embodiments improve. There may further be an optional network functionality for reconfiguring OTT connection 3350 between host computer 3310 and UE 3330, in response to variations in the measurement results. The measurement procedure and/or the network functionality for reconfiguring OTT connection 3350 may be implemented in software 3311 and hardware 3315 of host computer 3310 or in software 3331 and hardware 3333 of UE 3330, or both. In embodiments, sensors (not shown) may be deployed in or in association with communication devices through which OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of OTT connection 3350 may include message format, retransmission settings, preferred routing etc.; the reconfiguring need not affect base station 3320, and it may be unknown or imperceptible to base station 3320. Such procedures and functionalities may be known and practiced in the art. In certain embodiments, measurements may involve proprietary UE signaling facilitating host computer 3310's measurements of throughput, propagation times, latency and the like. The measurements may be implemented in that software 3311 and 3331 causes messages to be transmitted, in particular empty or 'dummy' messages, using OTT connection 3350 while it monitors propagation times, errors etc.

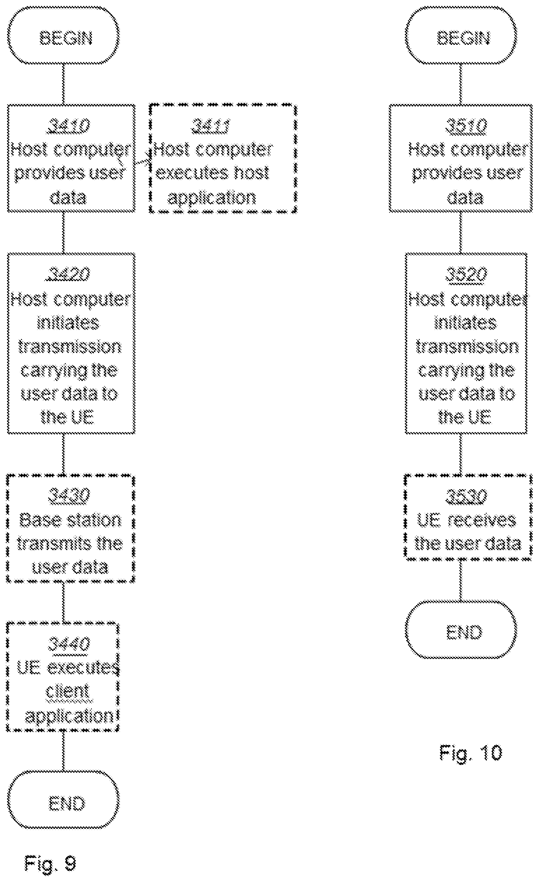

**Fig. 9** shows methods implemented in a communication system including a host computer, a base station and a user equipment in accordance with some embodiments.

Fig. 9 is a flowchart illustrating a method implemented in a communication system, in accordance with one embodiment. The communication system includes a host computer, a base station and a UE which may be those described with reference to Fig. 7 and Fig. 8. For simplicity of the present disclosure, only drawing references to Fig. 9 will be included in this section. In step 3410, the host computer provides user data. In substep 3411 (which may be optional) of step 3410, the host computer provides the user data by executing a host application. In step 3420, the host computer initiates a transmission carrying the user data to the UE. In step 3430 (which may be optional), the base station transmits to the UE the user data which was carried in the transmission that the host computer initiated, in accordance with the teachings of the embodiments described throughout this disclosure. In step 3440 (which may also be optional), the UE executes a client application associated with the host application executed by the host computer.

**Fig. 10** shows methods implemented in a communication system including a host computer, a base station and a user equipment in accordance with some embodiments.

Fig. 10 is a flowchart illustrating a method implemented in a communication system, in accordance with one embodiment. The communication system includes a host computer, a base station and a UE which may be those described with reference to Fig. 7 and Fig. 8. For simplicity of the present disclosure, only drawing references to Fig. 10 will be included in this section. In step 3510 of the method, the host computer provides user data. In an optional substep (not shown) the host computer provides the user data by executing a host application. In step 3520, the host computer initiates a transmission carrying the user data to the UE. The transmission may pass via the base station, in accordance with the teachings of the embodiments described throughout this disclosure. In step 3530 (which may be optional), the UE receives the user data carried in the transmission.

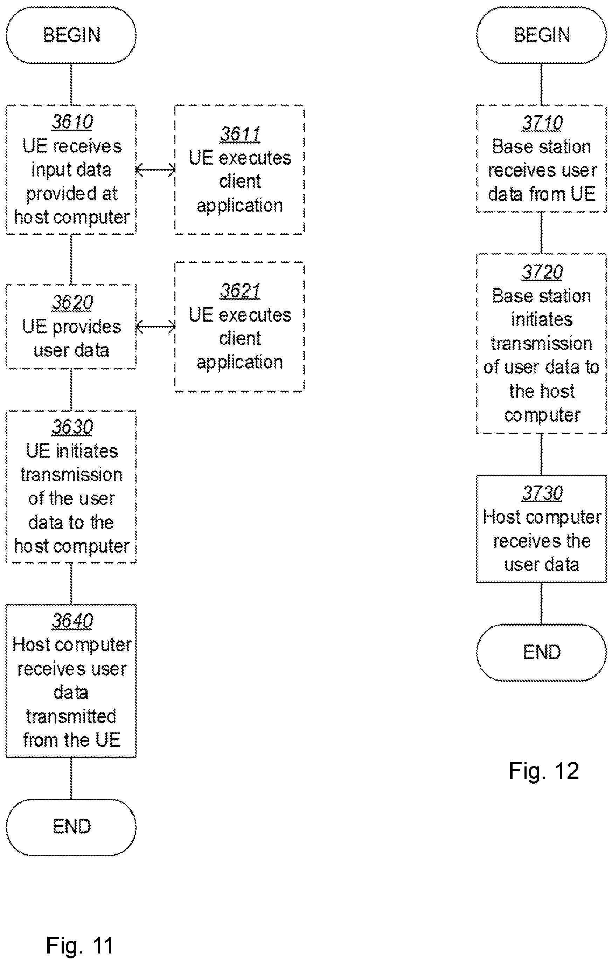

**Fig. 11** shows methods implemented in a communication system including a host computer, a base station and a user equipment in accordance with some embodiments.

Fig. 11 is a flowchart illustrating a method implemented in a communication system, in accordance with one embodiment. The communication system includes a host computer, a base station and a UE which may be those described with reference to Fig. 7 and Fig. 8. For simplicity of the present disclosure, only drawing references to Fig. 11 will be included in this section. In step 3610 (which may be optional), the UE receives input data provided by the host computer. Additionally or alternatively, in step 3620, the UE provides user data. In substep 3621 (which may be optional) of step 3620, the UE provides the user data by executing a client application. In substep 3611 (which may be optional) of step 3610, the UE executes a client application which provides the user data in reaction to the received input data provided by the host computer. In providing the user data, the executed client application may further consider user input received from the user. Regardless of the specific manner in which the user data was provided, the UE initiates, in substep 3630 (which may be optional), transmission of the user data to the host computer. In step 3640 of the method, the host computer receives the user data transmitted from the UE, in accordance with the teachings of the embodiments described throughout this disclosure.

**Fig. 12** show methods implemented in a communication system including a host computer, a base station and a user equipment in accordance with some embodiments.

Fig. 12 is a flowchart illustrating a method implemented in a communication system, in accordance with one embodiment. The communication system includes a host computer, a base station and a UE which may be those described with reference to Fig. 7 and Fig. 8. For simplicity of the present disclosure, only drawing references to Fig. 12 will be included in this section. In step 3710 (which may be optional), in accordance with the teachings of the embodiments described throughout this disclosure, the base station receives user data from the UE. In step 3720 (which may be optional), the base station initiates transmission of the received user data to the host computer. In step 3730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

It will be appreciated that the foregoing description and the accompanying drawings represent non-limiting examples of the methods and apparatus taught herein. As such, the apparatus and techniques taught herein are not limited by the foregoing description and accompanying drawings. The scope of the invention is defined by the appended claims.

## Claims

1. A method performed by a first core network node (16) when serving a first Radio Access Technology, RAT, for enabling paging of a User Equipment, UE, (10) in a wireless communication network, the method comprising:
*receiving* (401) an incoming communication addressed to the UE (10);
*detecting* (402) that the UE (10) has a dual registration in the first RAT and in a second RAT;
*determining* (404) a paging scheme based on UE (10) characteristics, wherein the characteristics comprises a speed and/or an acceleration of the UE (10), and wherein the UE (10) is categorized into a slow- and fast-moving UE (10) based on a predefined threshold; and
*transmitting* (405) a paging notification comprising the determined paging scheme to a second core network node (18) serving the second RAT as an instruction to page the UE (10) in the second RAT, thereby enabling paging of the UE (10) in both the first RAT and the second RAT of the wireless communication network.

2. The method according to claim 1, wherein after said detecting the method further comprises:
*receiving* (403) the characteristics of the UE (10).

3. The method according to claim 1 or 2, wherein the paging notification is transmitted over an N26 interface to the second core network node (18).

4. The method according to any one of claims 1-3, wherein the detecting comprises checking a current registration status of the UE (10) in one or both of the first and second RATs.

5. The method according any one of claims 1-4, wherein when a page response has been received from the UE (10) in the second RAT, the incoming communication is forwarded to the second core network node (18).

6. A first core network node (16) arranged for serving a first Radio Access Technology, RAT, for enabling paging of a User Equipment, UE, (10) in a wireless communication network, wherein the first core network node is configured to:
receive an incoming communication addressed to the UE (10);
detect that the UE (10) has a dual registration in the first RAT and in a second RAT;
determine a paging scheme based on UE (10) characteristics, wherein the characteristics comprises a speed and/or an acceleration of the UE (10), and wherein the UE (10) is categorized into a slow- and fast-moving UE (10) based on a predefined threshold; and
transmit a paging notification comprising the determined paging scheme to a second core network node (18) serving the second RAT as an instruction to page the UE (10) in the second RAT, thereby paging of the UE (10) in both the first RAT and the second RAT of the wireless communication network is enabled.

7. The first core network node (16) according to claim 6, wherein after said detecting the first core network node (16) is further configured to:
receive the characteristics of the UE (10).

8. The first core network node (16) according to claim 6 or 7, wherein the paging notification is adapted to be transmitted over an N26 interface to the second core network node (18).

9. The first core network node (16) according to any one of claims 6-8, wherein the detecting is adapted to comprise to check a current registration status of the UE (10) in one or both of the first and second RATs.

10. The first core network node (16) according any one of claims 6-9, wherein when a page response has been received from the UE (10) in the second RAT, the incoming communication is adapted to be forwarded to the second core network node (18).

11. A computer program product comprising instructions, which, when executed on at least one processor, cause the at least one processor to carry out the method according to any of the claims 1-5, as performed by the first core network node (16).

12. A computer-readable storage medium, having stored thereon a computer program product comprising instructions which, when executed on at least one processor, cause the at least one processor to carry out the method according to any of the claims 1-5, as performed by the first core network node (16).

## Patentansprüche

1. Verfahren, das von einem ersten Kernnetzknoten (16) beim Bedienen einer ersten Funkzugangstechnologie, RAT, zum Ermöglichen von Paging einer Benutzerausrüstung, UE, (10) in einem drahtlosen Kommunikationsnetzwerk durchgeführt wird, wobei das Verfahren Folgendes umfasst:
*Empfangen* (401) einer an die UE adressierten eingehenden Kommunikation (10);
*Erkennen* (402), dass die UE (10) eine Doppelregistrierung in der ersten RAT und in einer zweiten RAT aufweist;
*Bestimmen* (404) eines Paging-Schemas basierend auf Merkmalen der UE (10), wobei die Merkmale eine Geschwindigkeit und/oder eine Beschleunigung der UE (10) umfassen, und wobei die UE (10) basierend auf einem vordefinierten Schwellenwert in eine sich langsam und schnell bewegende UE (10) kategorisiert wird; und
*Übertragen* (405) einer Paging-Benachrichtigung, die das bestimmte Paging-Schema umfasst, an einen zweiten Kernnetzknoten (18), der die zweite RAT bedient, als Anweisung, Paging der UE (10) in der zweiten RAT durchzuführen, wodurch Paging der UE (10) sowohl in der ersten RAT als auch in der zweiten RAT des drahtlosen Kommunikationsnetzes ermöglicht wird.

2. Verfahren nach Anspruch 1, wobei das Verfahren nach dem Erkennen weiter Folgendes umfasst:
*Empfangen* (403) der Merkmale der UE (10).

3. Verfahren nach Anspruch 1 oder 2, wobei die Paging-Benachrichtigung über eine N26-Schnittstelle an den zweiten Kernnetzknoten (18) übertragen wird.

4. Verfahren nach einem der Ansprüche 1-3, wobei das Erkennen Prüfen eines aktuellen Registrierungsstatus der UE (10) in einer oder beiden der ersten und zweiten RAT umfasst.

5. Verfahren nach einem der Ansprüche 1-4, wobei, wenn eine Page-Antwort von der UE (10) in der zweiten RAT empfangen wurde, die eingehende Kommunikation an den zweiten Kernnetzknoten (18) weitergeleitet wird.

6. Erster Kernnetzknoten (16), der zum Bedienen einer ersten Funkzugangstechnologie, RAT, angeordnet ist, um Paging einer Benutzerausrüstung, UE, (10) in einem drahtlosen Kommunikationsnetzwerk zu ermöglichen, wobei der erste Kernnetzknoten konfiguriert ist zum:
Empfangen einer an die UE (10) adressierten eingehenden Kommunikation;
Erkennen, dass die UE (10) eine Doppelregistrierung in der ersten RAT und in einer zweiten RAT aufweist;
Bestimmen eines Paging-Schemas basierend auf Merkmalen der UE (10), wobei die Merkmale eine Geschwindigkeit und/oder eine Beschleunigung der UE (10) umfassen, und wobei die UE (10) basierend auf einem vordefinierten Schwellenwert in eine sich langsam und schnell bewegende UE (10) kategorisiert wird; und
Übertragen einer Paging-Benachrichtigung, die das bestimmte Paging-Schema umfasst, an einen zweiten Kernnetzknoten (18), der die zweite RAT bedient, als Anweisung, Paging der UE (10) in der zweiten RAT durchzuführen, wodurch Paging der UE (10) sowohl in der ersten RAT als auch in der zweiten RAT des drahtlosen Kommunikationsnetzes ermöglicht wird.

7. Erster Kernnetzknoten (16) nach Anspruch 6, wobei der erste Kernnetzknoten (16) nach dem Erkennen weiter konfiguriert zum:
Empfangen der Merkmale der UE (10).

8. Erster Kernnetzknoten (16) nach Anspruch 6 oder 7, wobei die Paging-Benachrichtigung so angepasst ist, dass sie über eine N26-Schnittstelle an den zweiten Kernnetzknoten (18) übertragen wird.

9. Erster Kernnetzknoten (16) nach einem der Ansprüche 6-8, wobei das Erkennen so angepasst ist, dass es Prüfen eines aktuellen Registrierungsstatus der UE (10) in einer oder beiden der ersten und zweiten RAT umfasst.

10. Erster Kernnetzknoten (16) nach einem der Ansprüche 6-9, wobei, wenn eine Page-Antwort von der UE (10) in der zweiten RAT empfangen wurde, die eingehende Kommunikation so angepasst ist, dass sie an den zweiten Kernnetzknoten (18) weitergeleitet wird.

11. Computerprogrammprodukt, das Anweisungen umfasst, die, wenn sie auf mindestens einem Prozessor ausgeführt werden, bewirken, dass der mindestens eine Prozessor das Verfahren nach einem der Ansprüche 1-5 ausführt, wie es vom ersten Kernnetzknoten (16) durchgeführt wird.

12. Computerlesbares Speichermedium, auf dem ein Computerprogrammprodukt gespeichert ist, das Anweisungen umfasst, die, wenn sie auf mindestens einem Prozessor ausgeführt werden, bewirken, dass der mindestens eine Prozessor das Verfahren nach einem der Ansprüche 1-5 ausführt, wie es vom ersten Kernnetzknoten (16) durchgeführt wird.

## Revendications

1. Procédé réalisé par un premier nœud de réseau d'infrastructure (16) lorsqu'il dessert une première technologie d'accès radio, RAT, pour permettre la radiomessagerie d'un Équipement d'Utilisateur, UE, (10) dans un réseau de communication sans fil, le procédé comprenant :
*la réception* (401) d'une communication entrante adressée à l'UE (10) ;
*la détection* (402) que l'UE (10) présente un double enregistrement dans la première RAT et dans une seconde RAT ;
*la détermination* (404) d'un système de radiomessagerie basé sur des caractéristiques de l'UE (10), dans lequel les caractéristiques comprennent une vitesse et/ou une accélération de l'UE (10), et dans lequel l'UE (10) est catégorisé en UE (10) se déplaçant lentement et rapidement sur la base d'un seuil prédéfini ; et
*la transmission* (405) d'une notification de radiomessagerie comprenant le système de radiomessagerie déterminé à un second nœud de réseau d'infrastructure (18) desservant la seconde RAT en tant qu'instruction pour radiomessagerier l'UE (10) dans la seconde RAT, permettant ainsi la radiomessagerie de l'UE (10) à la fois dans la première RAT et la seconde RAT du réseau de communication sans fil.

2. Procédé selon la revendication 1, dans lequel, après ladite détection, le procédé comprend en outre :
*la réception* (403) des caractéristiques de l'UE (10).

3. Procédé selon la revendication 1 ou 2, dans lequel la notification de radiomessagerie est transmise via une interface N26 au second nœud de réseau d'infrastructure (18).

4. Procédé selon l'une quelconque des revendications 1-3, dans lequel la détection comprend la vérification d'un statut d'enregistrement courant de l'UE (10) dans l'une ou les deux parmi la première et la seconde RAT.

5. Procédé selon l'une quelconque des revendications 1-4, dans lequel lorsqu'une réponse de radiomessage a été reçue à partir de l'UE (10) dans la seconde RAT, la communication entrante est transférée au second nœud de réseau d'infrastructure (18).

6. Premier nœud de réseau d'infrastructure (16) agencé pour desservir une première technologie d'accès radio, RAT, pour permettre la radiomessagerie d'un Équipement d'Utilisateur, UE, (10) dans un réseau de communication sans fil, dans lequel le premier nœud de réseau d'infrastructure est configuré pour :
recevoir une communication entrante adressée à l'UE (10) ;
détecter que l'UE (10) présente un double enregistrement dans la première RAT et dans une seconde RAT ;
déterminer un système de radiomessagerie basé sur des caractéristiques de l'UE (10), dans lequel les caractéristiques comprennent une vitesse et/ou une accélération de l'UE (10), et dans lequel l'UE (10) est catégorisé en UE (10) se déplaçant lentement et rapidement sur la base d'un seuil prédéfini ; et
transmettre une notification de radiomessagerie comprenant le système de radiomessagerie déterminé à un second nœud de réseau d'infrastructure (18) desservant la seconde RAT en tant qu'instruction pour envoyer un radiomessage à l'UE (10) dans la seconde RAT, la radiomessagerie de l'UE (10) à la fois dans la première RAT et la seconde RAT du réseau de communication sans fil est ainsi activée.

7. Premier nœud de réseau d'infrastructure (16) selon la revendication 6, dans lequel, après ladite détection, le premier nœud de réseau d'infrastructure (16) est en outre configuré pour :
recevoir les caractéristiques de l'UE (10).

8. Premier nœud de réseau d'infrastructure (16) selon la revendication 6 ou 7, dans lequel la notification de radiomessagerie est adaptée pour être transmise via une interface N26 au second nœud de réseau d'infrastructure (18).

9. Premier nœud de réseau d'infrastructure (16) selon l'une quelconque des revendications 6-8, dans lequel la détection est adaptée pour comprendre la vérification d'un statut d'enregistrement courant de l'UE (10) dans l'une ou les deux parmi la première et la seconde RAT.

10. Premier nœud de réseau d'infrastructure (16) selon l'une quelconque des revendications 6-9, dans lequel lorsqu'une réponse de radiomessage a été reçue à partir de l'UE (10) dans la seconde RAT, la communication entrante est adaptée pour être transférée au second nœud de réseau d'infrastructure (18).

11. Produit de programme informatique comprenant des instructions qui, lorsqu'elles sont exécutées sur au moins un processeur, amènent le au moins un processeur à mettre en œuvre le procédé selon l'une quelconque des revendications 1-5, tel que réalisé par le premier nœud de réseau d'infrastructure (16).

12. Support de stockage lisible par ordinateur, sur lequel est stocké un produit de programme informatique comprenant des instructions qui, lorsqu'elles sont exécutées sur au moins un processeur, amènent le au moins un processeur à mettre en œuvre le procédé selon l'une quelconque des revendications 1-5, tel que réalisé par le premier nœud de réseau d'infrastructure (16).
